# EUROPÄISCHE PATENTSCHRIFT

(11) **EP 4 449 002 B1**
(45) Veröffentlichungstag und Bekanntmachung des Hinweises auf die Patenterteilung: **12.11.2025**
(21) Anmeldenummer: 23701394.1
(22) Anmeldetag: 19.01.2023
(51) Int. Cl.: F16L 23/00, F16L 23/18

(54) **ANORDNUNG ZUM AUSRICHTEN ZWEIER ROHRLEITUNGEN**
ASSEMBLY FOR ALIGNING TWO PIPES
ENSEMBLE D'ALIGNEMENT DE DEUX TUYAUX

(30) Priorität: 25.02.2022 DE 102022201985
(43) Veröffentlichungstag der Anmeldung: 23.10.2024
(73) Patentinhaber: Siemens Energy Global GmbH & Co. KG, 81739 München (DE)
(72) Erfinder: DINGS, Markus, 41379 Brüggen (DE); THOMALLA, Martin, 47906 Kempen (DE)
(86) Internationale Anmeldenummer: PCT/EP2023/051222
(87) Internationale Veröffentlichungsnummer: WO 2023/160912

(56) Entgegenhaltungen:
- EP-A1- 0 316 283
- EP-A1- 3 742 035
- DE-B- 1 067 262
- US-A1- 2008 012 319
- US-A1- 2014 353 463

## Beschreibung

Die Erfindung betrifft eine Anordnung zum Ausrichten einer ersten Rohrleitung mit einer zweiten Rohrleitung, wobei die erste Rohrleitung ein Erst-Rohrleitungsende mit einem ersten Anpassring aufweist, der eine sich entlang einer Achse erstreckende Ausnehmung aufweist, um die sich ein Ringmaterial entlang einer Umfangsrichtung erstreckt, wobei die zweite Rohrleitung ein Zweit-Rohrleitungsende mit einem zweiten Anpassring aufweist, der eine sich entlang einer Achse erstreckende Ausnehmung aufweist, um die sich ein Ringmaterial entlang einer Umfangsrichtung erstreckt, wobei der erste Anpassring eine erste Anlagefläche aufweist, wobei der zweite Anpassring eine zweite Anlagefläche aufweist, wobei die erste Anlagefläche des ersten Anpassringes gegenüberliegend der zweiten Anlagefläche des zweiten Anpassringes berührend angeordnet ist.

Des Weiteren betrifft die Erfindung ein Verfahren zum Ausrichten einer ersten Rohrleitung mit einer zweiten Rohrleitung, wobei die erste Rohrleitung mit einem ersten Anpassring an einem Erst-Rohrleitungsende ausgebildet wird, wobei die zweite Rohrleitung mit einem zweiten Anpassring an einem Zweit-Rohrleitungsende ausgebildet wird, wobei der erste Anpassring eine erste Anlagefläche aufweist, wobei der zweite Anpassring eine zweite Anlagefläche aufweist, wobei die erste Anlagefläche des ersten Anpassringes gegenüberliegend der zweiten Anlagefläche des zweiten Anpassringes berührend angeordnet wird.

Rohrleitungen werden in der Regel mittels Flansche miteinander befestigt. Flansche im Sinne der Erfindung werden auch als Rohrleitungsflansche bezeichnet. Wenn vorliegend über Flansche ausgeführt wird, sind ausschließlich Rohrleitungsflansche gemeint. Flansche dienen der dichten, lösbaren Verbindung von Rohrabschnitten. Entscheidend für Dichtheit ist der mittels Flanschschrauben aufgebrachte Anpressdruck der kreisringförmigen Dichtflächen der Flansche auf eine gegebenenfalls dazwischen liegende Dichtung. Die Schrauben erstrecken sich durch Bohrungen in den Flanschen bzw. den sogenannten Flanschblättern. Flansche sind als Bestandteil der Rohrleitung in der Regel mit einem Rohrende verschweißt. Flansche können auch an Anschlussbauteilen vorgesehen sein.

US2008/012319 A1 offenbart eine Anordnung zum Ausrichten einer ersten Rohrleitung mit einer zweiten Rohrleitung, wobei eine erste Anlagefläche der ersten Rohrleitung eine Oberfläche einer Kugelscheibe bildet und eine zweite Anlagefläche der zweiten Rohrleitung eine zur Oberfläche der ersten Anlagefläche komplementär ausgebildete Oberfläche der Kugelscheibe bildet.

Häufig kommt es bei der Herstellung von Rohrleitungen und der Aufstellung von angeschlossenen Maschinen zu einem räumlichen Versatz der zusammenzufügenden Rohrleitungen, zum Beispiel aufgrund von Schweißverzug.

Die Kompensation eines derartigen Versatzes erfordert herkömmlich eine aufwendige Nacharbeit oder Anpassungsarbeit vor Ort unter regelmäßig schlechten Bedingungen, insbesondere ohne geeignete Werkzeugmaschinen. Transport-, Bearbeitungskosten und zeitliche Verzögerungen sind weitere zum Teil ungeplante Nachteile.

Die Erfindung hat es sich zur Aufgabe gemacht, diese Arbeiten zu vereinfachen.

Um flexibel verschiedenartige Versatzphänomene zwischen Rohrleitungen einfach kompensieren zu können, wird zur Lösung der Aufgabe erfindungsgemäß einer Anordnung der eingangs definierten Art mit den zusätzlichen Merkmalen des kennzeichnenden Teils des Anspruchs 1 vorgeschlagen.

Weiterhin wird ein Verfahren zum Ausrichten von zwei Rohrleitungen vorgeschlagen.

Mit der Erfindung können die durch Fertigungstoleranzen entstehenden Formabweichungen für die Dichtung bezogen auf die Anordnung der Dichtflächen zueinander ohne weitere Bearbeitung vor Ort ausgeglichen werden, wobei die Bauform sehr kompakt ist.

Fertigungstoleranzen von Prozessleitungen oder Rohrleitungen allgemein und die dadurch entstehenden Formabweichungen für Dichtungen bezogen auf die Anordnung der Dichtflächen zueinander können ohne weitere Bearbeitung vor Ort bei der Montage ausgeglichen werden, wobei Anpass-Schweißnähte oder aufwendig zu bearbeitende Anpassringe nicht mehr erforderlich sind.

Ein weiterer Vorteil der Erfindung ist der für Verdichteranwendungen notwendige Kraftnebenschluss der Dichtungselemente. Mit der Erfindung wird immer eine definierte Kraftkopplung der zu verbindenden Rohrleitungen gewährleistet und damit eine definierte Krafteinleitung in Apparate (z.B. Verdichter) gewährleistet. Ein weiterer Vorteil gegenüber Anpassschweißnähten ist der nicht vorhandenen thermisch induzierte Verzug nach der Schweißung.

Die Erfindung sieht vor an den Enden einer ersten Rohrleitung einen Anpassring anzuordnen, deren Berührungsfläche zu einem zweiten Anpassring einer zweiten Rohrleitung kugelförmig geformt sind. Die geometrische Form der Anlageflächen entspricht einer Kugelschicht, wobei auch der Begriff Kugelscheibe verwendet wird. Eine Kugelschicht, auch Kugelscheibe genannt, ist ein Teil einer Kugel, der von zwei parallelen Ebenen ausgeschnitten wird. Der gekrümmte Flächenteil wird Kugelzone genannt.

Mit der geometrischen Form der Anlageflächen ist es möglich einen Winkelversatz zwischen zwei Rohrleitungen auszugleichen. Die erste Rohrleitung kann mit anderen Worten gegenüber der zweiten Rohrleitung mittels der Anpassringe geneigt werden, wodurch ein Winkelversatz ausgeglichen wird.

Erfindungsgemäß ist zwischen dem zweiten Anpassring und dem Zweit-Rohrleitungsende der zweiten Rohrleitung ein dritter Anpassring angeordnet, der eine sich entlang einer Achse erstreckende Ausnehmung aufweist, um die sich ein Ringmaterial entlang einer Umfangsrichtung erstreckt, wobei der zweite Anpassring und der dritte Anpassring verschiebbar gegeneinander ausgebildet sind.

Hierdurch lassen sich Abstände zwischen den Rohrleitungen in ihrer Längsrichtung einstellen und optimieren. Der Abstand zwischen dem Erst-Rohrleitungsende und dem Zweit-Rohrleitungsende kann dadurch vergrößert oder verkleinert werden.

Vorteilhafte Weiterbildungen sind in den Unteransprüchen angegeben.

In einer ersten vorteilhaften Weiterbildung ist der erste Anpassring integral mit der ersten Rohrleitung ausgebildet. Das Erst-Rohrleitungsende kann demnach so ausgebildet werden, dass die kugelförmige Anlagefläche direkt in der ersten Rohrleitung angebracht wird.

In einer alternativen und vorteilhaften Ausführungsform ist der erste Anpassring als separater mit der ersten Rohrleitung verbindbarer Anpassring ausgebildet. Somit kann der mit der kugelförmigen Anlagefläche ausgebildete Anpassring an die erste Rohrleitung in einer geeigneten Weise, zum Beispiel durch ein Schweißverfahren verbunden werden.

In einer weiteren vorteilhaften Weiterbildung ist entlang der Umfangsrichtung einer ersten Dichtung zwischen dem ersten Anpassring und dem zweiten Anpassring angeordnet.

In einer weiteren vorteilhaften Weiterbildung weist der zweite Anpassring ein Gewinde auf, wobei der dritte Anpassring ebenfalls ein Gewinde aufweist, wobei der zweite Anpassring und der dritte Anpassring über das Gewinde miteinander verbunden sind.

Ein Gewinde ist eine profilierte Einkerbung, die fortlaufend wendelartig (also als Schraubenlinie) in einer zylinderförmigen Innen- oder Außenwand verläuft. Diese fortlaufende Vertiefung wird als Gewindegang auf einer Schraube bzw. in einer Mutter bezeichnet. Es handelt sich um eine Abwandlung der schiefen Ebene, wobei eine Übersetzung einer Umfangskraft in eine größere Längskraft stattfindet, z. B. in Spindelpressen, Weinpressen und Wagenhebern. Bauteile mit Außen- (Schrauben) und solche mit Innengewinde (Muttern) bilden immer zusammenpassende Paare.

Durch ein leichtes Drehen der ersten Rohrleitung oder des ersten bzw. zweiten Anpassringes gegenüber der zweiten Rohrleitung oder des dritten Anpassringes kann der Abstand zwischen der ersten Rohrleitung und der zweiten Rohrleitung variiert werden.

In einer vorteilhaften Weiterbildung umfasst das Gewinde einen Gewindegang, der sich um 360° in der Umfangsrichtung erstreckt.

In einer weiteren vorteilhaften Weiterbildung ist der Gewindegang helixförmig ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: eine schematische Darstellung einer ersten Rohrleitung und einer zweiten Rohrleitung in einer optimalen Ausrichtung
- Figure 2: eine schematische Darstellung einer ersten Rohrleitung unter einem Winkelversatz zu einer zweiten Rohrleitung
- Figur 3: eine schematische Darstellung einer ersten Rohrleitung unter Längsversatz zu einer zweiten Rohrleitung
- Figur 4: eine schematische Darstellung einer ersten Rohrleitung und einer zweiten Rohrleitung mit Darstellung von Anpassringen
- Figur 5: eine seitliche schematische Darstellung der Anpassringe
- Figur 6: eine schematische Draufsicht auf die Anpassringe
- Figur 7: eine schematische Schnittdarstellung durch die Anpassringe
- Figur 8: eine schematische Schnittdarstellung durch die Anpassringe mit einem Winkelversatz
- Figur 9: eine seitliche schematische Darstellung der Anpassringe in einer Einzeldarstellung.

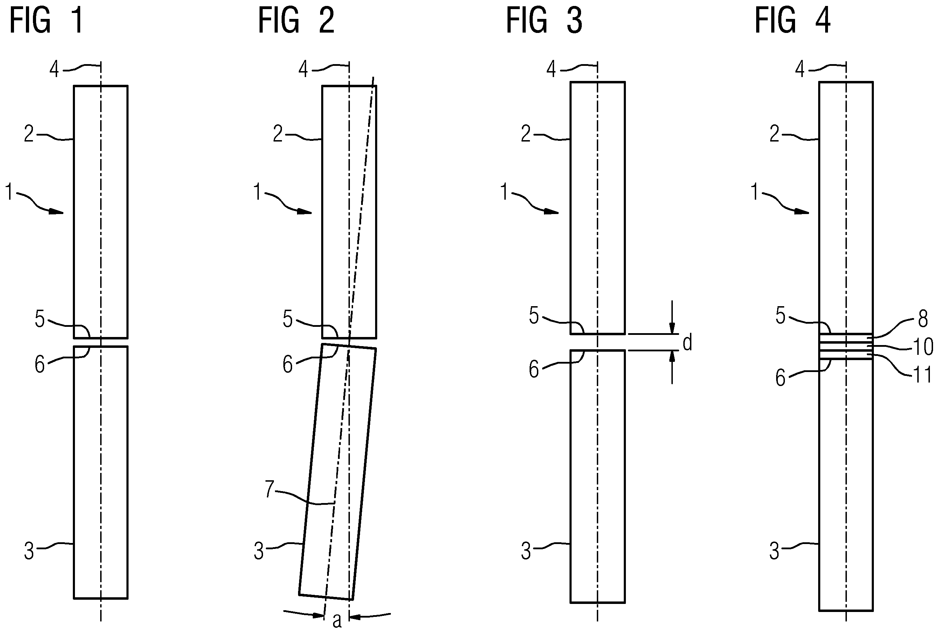

Die Figur 1 zeigt eine einfache schematische Darstellung einer Anordnung mit 1 einer ersten Rohrleitung 2 und einer zweiten Rohrleitung 3, wobei sich die beiden Rohrleitungen 2, 3 entlang einer gemeinsamen Achse 4 erstrecken. Im Betrieb strömt ein Strömungsmedium durch die erste und zweite Rohrleitung 2, 3. Mit der Figur 1 soll eine ideale Position der ersten und zweiten Rohrleitung 2, 3 symbolisiert werden, bei der die beiden Rohrleitungen 2, 3 parallel zur Achse 4 angeordnet sind. Die beiden Rohrleitungen 2, 3 sind im Betriebsfall miteinander verbunden, vorzugsweise werden Flansche eingesetzt, um die beiden Rohrleitungen miteinander zu verbinden.

Die erste Rohrleitung 2 weist an einem Ende ein Erst-Rohrleitungsende 5 auf, wobei die zweite Rohrleitung 3 gegenüber dem Erst-Rohrleitungsende 5 ein Zweit-Rohrleitungsende 6 aufweist.

Die Figur 2 symbolisiert einen Zustand, bei dem die erste Rohrleitung 2 gegenüber der zweiten Rohrleitung 3 um einen Winkel a geneigt ist. Solch eine Anordnung ist beispielsweise bei einer Montage der Rohrleitungen 2, 3 erforderlich, da oftmals ein Verzug oder Fertigungstoleranzen nicht optimal ausgeführt sind. Die zweite Rohrleitung 3 erstreckt sich hierbei entlang einer weiteren Achse 7, die gegenüber der Achse 4 unter dem Winkel a geneigt ist.

Die Figur 3 wiederum symbolisiert einen Zustand, bei dem die erste Rohrleitung 2 gegenüber der zweiten Rohrleitung 3 um eine Distanz d entlang der Achse 4 beabstandet ist. Dieser Abstand ist beispielsweise bei einer Montage der Rohrleitungen 2, 3 erforderlich, da oftmals ein Verzug oder Fertigungstoleranzen nicht optimal ausgeführt sind. Die zweite Rohrleitung 3 erstreckt sich hierbei entlang der weiteren Achse 7, die parallel zur Achse 4 ausgerichtet ist.

In der Praxis taucht in der Regel eine Mischung des Zustandes gemäß Figur 2 und des Zustandes gemäß der Figur 3 auf. Mit anderen Worten: Die beiden Rohrleitungen weisen nach einem Einbau einen Versatz unter einem Winkel a und einen Abstand d auf. Mit der Erfindung wird eine Anordnung vorgeschlagen, mit der die beiden Rohrleitungen 2, 3 trotz des Versatzes um den Winkel a und dem Abstand d miteinander verbunden werden können. Dies wird durch eine Anordnung erreicht, die in Figur 4 symbolisiert ist.

Danach weist die Anordnung 1 eine erste Rohrleitung 2 auf, wobei die erste Rohrleitung 2 ein Erst-Rohrleitungsende 5 mit einem ersten Anpassring 8 aufweist, der eine sich entlang einer Achse 4 erstreckende Ausnehmung (nicht dargestellt in Figur 4) aufweist, um die sich ein Ringmaterial entlang einer Umfangsrichtung 9 erstreckt.

Die Anordnung 1 weist ferner eine zweite Rohrleitung 3 auf mit einem Zweit-Rohrleitungsende 6 mit einem zweiten Anpassring 10 auf, der eine sich entlang der Achse 4 erstreckende Ausnehmung (nicht dargestellt in Figur 4) aufweist, um die sich ein Ringmaterial entlang einer Umfangsrichtung 9 erstreckt.

Die Anordnung 1 gemäß Figur 4 weist noch einen dritten Anpassring 11 auf der im Folgenden noch erläutert wird.

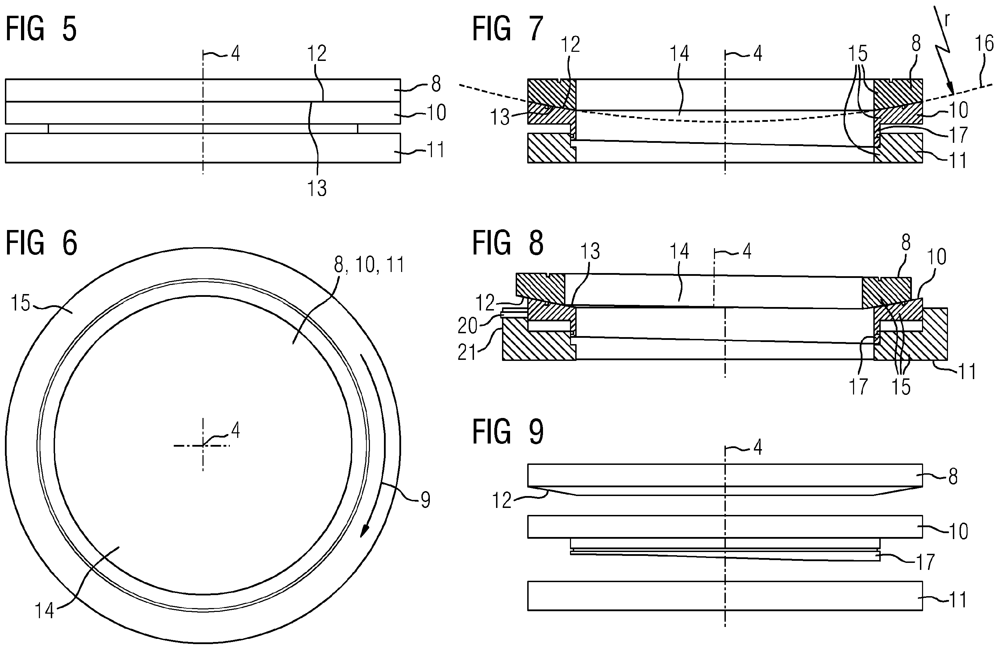

Mit den Anpassringen 8, 10, 11 ist es möglich, einen Versatz unter einem Winkel a und einen Abstand d zwischen der ersten Rohrleitung 2 und der zweiten Rohrleitung 3 anzupassen, was mit Hilfe der Figuren 5 bis 9 nun erläutert wird.

Die Figur 5 zeigt eine seitliche Darstellung der drei Anpassringe 8, 10, 11. Der erste Anpassring 8 weist eine erste Anlagefläche 12 auf, wobei der zweite Anpassring 10 eine zweite Anlagefläche 13 auf, wobei die erste Anlagefläche 12 des ersten Anpassringes 8 gegenüberliegend der zweiten Anlagefläche 13 des zweiten Anpassringes 10 berührend angeordnet ist.

Die Figur 6 zeigt eine Ansicht von oben auf die drei Anpassringe 8, 10, 11. Die Anpassringe 8, 10, 11 weisen eine sich entlang der Achse 4 erstreckende Ausnehmung 14 auf, um die sich ein Ringmaterial 15 entlang der Umfangsrichtung 9 erstreckt.

Die Figuren 7 und 8 zeigen eine Schnittdarstellung durch die drei Anpassringe 8, 10, 11. Die Figur 7 zeigt hierbei den Zustand an, bei dem die erste Rohrleitung 2 keinen Versatz unter einem Winkel gegenüber der zweiten Rohrleitung 3 aufweist (Winkel a = 0). Die Figur 8 zeigt den Zustand an, bei dem die erste Rohrleitung 2 einen Versatz unter einem Winkel gegenüber der zweiten Rohrleitung 3 aufweist (Winkel a = ca. 3°).

Die erste Anlagefläche 12 des ersten Anpassringes 8 entspricht hierbei der geometrischen Form einer Oberfläche einer Kugelscheibe. Eine Kugelscheibe ist ein Teil einer Kugel. In der Figur 7 soll die Kugelgestalt mit der Hilfslinie 16 dargestellt werden, wobei die Hilfslinie einen Teil einer Kugel mit dem Radius r darstellen soll.

Die zweite Anlagefläche 13 weist eine zur Oberfläche der ersten Anlagenfläche 12 komplementär ausgebildete Oberfläche der Kugelscheibe auf. Dadurch kann der erste Anpassring 8 gegenüber dem zweiten Anpassring 10 um den Radius r gedreht werden, wobei die beiden Anlagenflächen 12, 13 berührend bleiben.

Die Figur 8 zeigt diesen Zustand, bei dem der zweite Anpassring 10 gegenüber dem ersten Anpassring 8 leicht gedreht ist. Die Anlagenflächen 12, 13 berühren sich auf Grund der geometrischen Form.

In einer ersten Ausführungsform ist der erste Anpassring 8 integral mit der ersten Rohrleitung 2 ausgebildet. In einer alternativen Ausführungsform ist der erste Anpassring 8 als separater mit der ersten Rohrleitung 2 verbindbarer Anpassring ausgebildet.

Um die Dichtwirkung zwischen dem ersten Anpassring 8 und dem zweiten Anpassring 10 zu verbessern, ist eine Dichtung entlang der Umfangsrichtung zwischen dem ersten und zweiten Anpassring 8, 10 angeordnet.

Um einen Versatz in Richtung der Achse 4 auszugleichen, wird ein dritter Anpassring 11 angeordnet. Dabei ist zwischen dem zweiten Anpassring 10 und dem Zweit-Rohrleitungsende 6 der zweiten Rohrleitung 3 ein dritter Anpassring 11 angeordnet, der eine sich entlang der Achse 4 erstreckende Ausnehmung 14 aufweist, um die sich ein Ringmaterial 15 entlang der Umfangsrichtung 9 erstreckt, wobei der zweite Anpassring 10 und der dritte Anpassring 11 verschiebbar gegeneinander ausgebildet sind. Dies wird erreicht, indem der zweite Anpassring 10 ein Gewinde 17 aufweist, wobei der dritte Anpassring 11 ein Gewinde 17 aufweist, wobei der zweite Anpassring 10 und der dritte Anpassring 11 über das Gewinde 17 miteinander verbunden sind. Somit wird durch ein Drehen des zweiten Anpassringes 10 gegenüber dem dritten Anpassring 11 ein Abstand zwischen dem zweiten Anpassring 10 und dem dritten Anpassring 11 variiert.

In einer ersten Ausführungsform ist der dritte Anpassring 11 integral mit der zweiten Rohrleitung 3 ausgebildet. In einer alternativen Ausführungsform ist der dritte Anpassring 11 als separater mit der zweiten Rohrleitung 3 verbindbarer Anpassring 11 ausgebildet.

In einer Ausführungsform ist das Gewinde 17 mit einem Gewindegang ausgebildet wird, der sich um 360° in der Umfangsrichtung erstreckt.

Die Figur 8 zeigt ebenfalls eine Variante in der eine axiale Sicherung eingebaut ist. Die axiale Sicherung dient dazu nach dem Ausrichten den zweiten Anpassring 10 mit dem dritten Anpassring 11 miteinander zu verbinden. Die axiale Sicherung erfolgt über einen Überhang 21 am dritten Anpassring 11, der so gestaltet ist, dass dieser um den zweiten Anpassring 10 anliegt, wobei ein Verschieben senkrecht zur Achse 4 verhindert wird. In diesen Überhang 21 ist ein Stift 20 angeordnet, der derart ausgebildet ist, dass dieser eine dauerhafte Kraft vom Überhang 21 auf den zweiten Anpassring 10 ausübt. Dies kann beispielsweise über ein Gewinde erfolgen.

Wie in Figur 9 zu sehen ist, ist der Gewindegang helixförmig ausgebildet.

Bei der Montage der ersten Rohrleitung 2 mit der zweiten Rohrleitung 3 werden der Winkelversatz und der Abstand mit Hilfe der Anpassringe 8, 10, 11 ausgeglichen. Nach diesem Schritt werden die Anpassringe 8, 10, 11 stoffschlüssig miteinander verbunden. Das stoffschlüssige Verbinden kann durch eine Schweißung erfolgen.

## Patentansprüche

1. Anordnung (1) zum Ausrichten einer ersten Rohrleitung (2) mit einer zweiten Rohrleitung (3),
umfassend eine erste Rohrleitung (2) und eine zweite Rohrleitung (3),
wobei die erste Rohrleitung (2) ein Erst-Rohrleitungsende (5) mit einem ersten Anpassring (8) aufweist, der eine sich entlang einer Achse (4) erstreckende Ausnehmung (14) aufweist, um die sich ein Ringmaterial (15) entlang einer Umfangsrichtung (9) erstreckt,
wobei die zweite Rohrleitung (3) ein Zweit-Rohrleitungsende (6) mit einem zweiten Anpassring (10) aufweist, der eine sich entlang einer Achse (4) erstreckende Ausnehmung (14) aufweist, um die sich ein Ringmaterial (15) entlang einer Umfangsrichtung (9) erstreckt,
wobei der erste Anpassring (8) eine erste Anlagefläche (12) aufweist,
wobei der zweite Anpassring (10) eine zweite Anlagefläche (13) aufweist,
wobei die erste Anlagefläche (12) des ersten Anpassringes (8) gegenüberliegend der zweiten Anlagefläche (13) des zweiten Anpassringes (10) berührend angeordnet ist,
wobei die erste Anlagefläche (12) eine Oberfläche einer Kugelscheibe bildet,
wobei die zweite Anlagefläche (13) eine zur Oberfläche der ersten Anlagenfläche (12) komplementär ausgebildete Oberfläche der Kugelscheibe bildet,
**dadurch gekennzeichnet, dass** zwischen dem zweiten Anpassring (10) und dem Zweit-Rohrleitungsende (6) der zweiten Rohrleitung (3) ein dritter Anpassring (11) angeordnet ist, der eine sich entlang einer Achse (4) erstreckende Ausnehmung (14) aufweist, um die sich ein Ringmaterial (15) entlang einer Umfangsrichtung (9) erstreckt,
wobei der zweite Anpassring (10) und der dritte Anpassring (11) verschiebbar gegeneinander ausgebildet sind.

2. Anordnung (1) nach Anspruch 1,
wobei der erste Anpassring (8) integral mit der ersten Rohrleitung (2) ausgebildet ist.

3. Anordnung (1) nach Anspruch 1,
wobei der erste Anpassring (8) als separater mit der ersten Rohrleitung (2) verbindbarer Anpassring (8) ausgebildet ist.

4. Anordnung (1) nach einem der vorhergehenden Ansprüche, mit einer entlang der Umfangsrichtung (9) angeordneten ersten Dichtung zwischen dem ersten Anpassring (8) und dem zweiten Anpassring(10).

5. Anordnung (1) nach Anspruch 1,
wobei der dritte Anpassring (11) integral mit der zweiten Rohrleitung (3) ausgebildet ist.

6. Anordnung (1) nach Anspruch 1,
wobei der dritte Anpassring (11) als separater mit der zweiten Rohrleitung (3) verbindbarer Anpassring (11) ausgebildet ist.

7. Anordnung (1) nach einem der Ansprüche 1 bis 6,
wobei der zweite Anpassring (10) ein Gewinde (17) aufweist,
wobei der dritte Anpassring (11) ein Gewinde (17) aufweist,
wobei der zweite Anpassring (10) und der dritte Anpassring (11) über das Gewinde (17) miteinander verbunden sind.

8. Anordnung (1) nach Anspruch 7,
wobei das Gewinde (17) einen Gewindegang umfasst, der sich um 360° in der Umfangsrichtung erstreckt.

9. Anordnung (1) nach Anspruch 7 oder 8,
wobei der Gewindegang helixförmig ausgebildet ist.

10. Verfahren zum Ausrichten einer ersten Rohrleitung (2) mit einer zweiten Rohrleitung (3),
wobei die erste Rohrleitung (2) mit einem ersten Anpassring (8) an einem Erst-Rohrleitungsende (5) ausgebildet wird,
wobei die zweite Rohrleitung (3) mit einem zweiten Anpassring (10) an einem Zweit-Rohrleitungsende (6) ausgebildet wird,
wobei der erste Anpassring (8) eine erste Anlagefläche (12) aufweist,
wobei der zweite Anpassring (10) eine zweite Anlagefläche (13) aufweist,
wobei die erste Anlagefläche (12) des ersten Anpassringes (8) gegenüberliegend der zweiten Anlagefläche (13) des zweiten Anpassringes (10) berührend angeordnet wird,
wobei die erste Anlagefläche (12) eine Oberfläche einer Kugelscheibe bildet,
wobei die zweite Anlagefläche (13) eine zur Oberfläche der ersten Anlagenfläche (12) komplementär ausgebildete Oberfläche der Kugelscheibe bildet, wobei ein Winkelversatz zwischen der ersten Rohrleitung (2) gegenüber der zweiten Rohrleitung (3) durch ein Verschieben des ersten Anpassringes (8) gegenüber dem zweiten Anpassring (10) entlang der Oberfläche der Kugelscheibe ausgeglichen wird,
**dadurch gekennzeichnet, dass** die zweite Rohrleitung (3) mit einem dritten Anpassring (11) ausgebildet wird, wobei der zweite Anpassring (10) und der dritte Anpassring (11) berührend aneinander angeordnet werden,
wobei der zweite Anpassring (10) und der dritte Anpassring (11) gegeneinander verschiebbar ausgebildet werden.

11. Verfahren nach Anspruch 10,
wobei zwischen dem ersten Anpassring (8) und dem zweiten Anpassring (10) eine Dichtung in Umfangsrichtung (9) angeordnet wird.

12. Verfahren nach Anspruch 10 oder 11,
wobei der dritte Anpassring (11) und der zweite Anpassring (10) mit einem Gewinde (17) miteinander verbunden werden

13. Verfahren nach Anspruch 12,
wobei das Gewinde (17) mit einem Gewindegang ausgebildet wird, der sich um 360° in der Umfangsrichtung erstreckt.

14. Verfahren nach Anspruch 12,
wobei der Gewindegang helixförmig ausgebildet wird.

## Claims

1. Assembly (1) for aligning a first pipeline (2) with a second pipeline (3),
comprising a first pipeline (2) and a second pipeline (3),
wherein the first pipeline (2) has a first pipeline end (5) with a first adjusting ring (8) which has a cut-out (14) extending along an axis (4), around which cut-out a ring material (15) extends in a circumferential direction (9),
wherein the second pipeline (3) has a second pipeline end (6) with a second adjusting ring (10) which has a cut-out (14) extending along an axis (4), around which cut-out a ring material (15) extends in a circumferential direction (9)
wherein the first adjusting ring (8) has a first abutment surface (12),
wherein the second adjusting ring (10) has a second abutment surface (13),
wherein the first abutment surface (12) of the first adjusting ring (8) is arranged opposite and in contact with the second abutment surface (13) of the second adjusting ring (10),
wherein the first abutment surface (12) forms a surface of a spherical disc,
wherein the second abutment surface (13) forms a spherical-disc surface which is configured in a manner complementary to the surface of the first abutment surface (12),
**characterized in that**
a third adjusting ring (11) is arranged between the second adjusting ring (10) and the second pipeline end (6) of the second pipeline (3), said third adjusting ring having a cut-out (14) extending along an axis (4), around which cut-out a ring material (15) extends along a circumferential direction (9),
wherein the second adjusting ring (10) and the third adjusting ring (11) are configured to be displaceable relative to one another.

2. Assembly (1) according to Claim 1,
wherein the first adjusting ring (8) is configured integrally with the first pipeline (2).

3. Assembly (1) according to Claim 1,
wherein the first adjusting ring (8) is configured as a separate adjusting ring (8) which can be connected to the first pipeline (2).

4. Assembly (1) according to one of the preceding claims, having a first seal between the first adjusting ring (8) and the second adjusting ring (10) that is arranged in the circumferential direction (9).

5. Assembly (1) according to Claim 1,
wherein the third adjusting ring (11) is configured integrally with the second pipeline (3).

6. Assembly (1) according to Claim 1,
wherein the third adjusting ring (11) is configured as a separate adjusting ring (11) which can be connected to the second pipeline (3).

7. Assembly (1) according to one of Claims 1 to 6,
wherein the second adjusting ring (10) has a thread (17), wherein the third adjusting ring (11) has a thread (17), wherein the second adjusting ring (10) and the third adjusting ring (11) are connected together via the thread (17).

8. Assembly (1) according to Claim 7,
wherein the thread (17) comprises a thread turn which extends over 360° in the circumferential direction.

9. Assembly (1) according to Claim 7 or 8,
wherein the thread turn is configured in a helical manner.

10. Method for aligning a first pipeline (2) with a second pipeline (3),
wherein the first pipeline (2) is configured with a first adjusting ring (8) on a first pipeline end (5),
wherein the second pipeline (3) is configured with a second adjusting ring (10) on a second pipeline end (6),
wherein the first adjusting ring (8) has a first abutment surface (12),
wherein the second adjusting ring (10) has a second abutment surface (13),
wherein the first abutment surface (12) of the first adjusting ring (8) is arranged opposite and in contact with the second abutment surface (13) of the second adjusting ring (10),
wherein the first abutment surface (12) forms a surface of a spherical disc,
wherein the second abutment surface (13) forms a spherical-disc surface which is configured in a manner complementary to the surface of the first abutment surface (12), wherein an angular offset between the first pipeline (2) and the second pipeline (3) is compensated by a displacement of the first adjusting ring (8) relative to the second adjusting ring (10) along the spherical-disc surface,
**characterized in that**
the second pipeline (3) is configured with a third adjusting ring (11), wherein the second adjusting ring (10) and the third adjusting ring (11) are arranged in contact with one another,
wherein the second adjusting ring (10) and the third adjusting ring (11) are configured to be displaceable relative to one another.

11. Method according to Claim 10,
wherein a seal is arranged in the circumferential direction (9) between the first adjusting ring (8) and the second adjusting ring (10).

12. Method according to Claim 10 or 11,
wherein the third adjusting ring (11) and the second adjusting ring (10) are connected together by a thread (17).

13. Method according to Claim 12,
wherein the thread (17) is configured with a thread turn which extends over 360° in the circumferential direction.

14. Method according to Claim 12,
wherein the thread turn is configured in a helical manner.

## Revendications

1. Agencement (1) d'alignement d'un premier tuyau (2) sur un deuxième tuyau (3),
comprenant un premier tuyau (2) et un deuxième tuyau (3),
dans lequel le premier tuyau (2) a un premier bout (5) ayant une première bague (8) d'adaptation, qui a, s'étendant suivant un axe (4), un évidement (14), autour duquel un matériau (15) de bague s'étend suivant une direction (9) périphérique,
dans lequel le deuxième tuyau (3) a un deuxième bout (6) ayant une deuxième bague (10) d'adaptation, qui a, s'étendant suivant un axe (4), un évidement (14), autour duquel un matériau (15) de bague s'étend suivant une direction (9) périphérique,
dans lequel la première bague (8) d'adaptation a une première surface (12) d'application,
dans lequel la deuxième bague (10) d'adaptation a une deuxième surface (13) d'application,
dans lequel la première surface (12) d'application de la première bague (8) d'adaptation est disposée en touchant en face de la deuxième surface (13) d'application de la deuxième bague (10) d'adaptation,
dans lequel la première surface (12) d'application forme une surface d'une rondelle à portée sphérique,
dans lequel la deuxième surface (13) d'application forme une surface d'une rondelle à portée sphérique constituée de manière complémentaire à la surface de la première surface (12) d'application,
**caractérisé en ce que**,
entre la deuxième bague (10) d'adaptation et le deuxième bout (6) du deuxième tuyau (3), est disposée une troisième bague (11) d'adaptation, qui a, s'étendant suivant un axe (4), un évidement (14), autour duquel un matériau (15) de bague s'étend suivant une direction (9) périphérique,
dans lequel la deuxième bague (10) d'adaptation et la troisième bague (11) d'adaptation sont constituées de manière à pouvoir coulisser l'une par rapport à l'autre.

2. Agencement (1) suivant la revendication 1,
dans lequel la première bague (8) d'adaptation est d'un seul tenant avec le premier tuyau (2).

3. Agencement (1) suivant la revendication 1,
dans lequel la première bague (8) d'adaptation est constituée sous la forme d'une bague (8) d'adaptation pouvant être assemblée au premier tuyau (2).

4. Agencement (1) suivant l'une des revendications précédentes, comprenant, disposée suivant la direction (9) périphérique, une première garniture d'étanchéité entre la première bague (8) d'adaptation et la deuxième bague (10) d'adaptation.

5. Agencement (1) suivant la revendication 1,
dans lequel la troisième bague (11) d'adaptation est d'un seul tenant avec le deuxième tuyau (3).

6. Agencement (1) suivant la revendication 1,
dans lequel la troisième bague (11) d'adaptation est constituée sous la forme d'une bague (11) d'adaptation pouvant être assemblée de manière distincte avec le deuxième tuyau (3).

7. Agencement (1) suivant l'une des revendications 1 à 6,
dans lequel la deuxième bague (10) d'adaptation a un filet (17),
dans lequel la troisième bague (11) d'adaptation a un filet (17),
dans lequel la deuxième bague (10) d'adaptation et la troisième bague (11) d'adaptation sont assemblées entre elles par le filet (17).

8. Agencement (1) suivant la revendication 7,
dans lequel le filet (17) comprend un pas, qui s'étend sur 360° dans la direction périphérique.

9. Agencement (1) suivant la revendication 7 ou 8,
dans lequel le pas du filet est en forme d'hélice.

10. Procédé d'alignement d'un premier tuyau (2) sur un deuxième tuyau (3),
dans lequel on constitue le premier tuyau (2) avec une première bague (8) d'adaptation à un premier bout (5),
dans lequel on constitue le deuxième tuyau (3) avec une deuxième bague (10) d'adaptation à un deuxième bout (6),
dans lequel la première bague (8) d'adaptation a une première surface (12) d'application,
dans lequel la deuxième bague (10) d'adaptation a une deuxième surface (13) d'application,
dans lequel on met la première surface (12) d'application de la première bague (8) d'adaptation en contact en face de la deuxième surface (13) d'application de la deuxième bague (10) d'adaptation, dans lequel la première surface (12) d'application forme une surface d'une rondelle à portée sphérique,
dans lequel la deuxième surface (13) d'application forme une surface, de constitution complémentaire de la surface de la première surface (12) d'application, de la rondelle à portée sphérique, dans lequel on compense un décalage angulaire entre le premier tuyau (2) par rapport au deuxième tuyau (3) par un coulissement de la première bague (8) d'adaptation par rapport à la deuxième bague (10) d'adaptation suivant la surface de la rondelle à portée sphérique,
**caractérisé en ce que**
l'on constitue le deuxième tuyau (3) avec une troisième bague (11) d'adaptation, dans lequel on dispose la deuxième bague (10) d'adaptation et la troisième bague (11) d'adaptation en contact l'une avec l'autre,
dans lequel on constitue la deuxième bague (10) d'adaptation et la troisième bague (11) d'adaptation, de manière à ce qu'elles puissent coulisser l'une par rapport à l'autre.

11. Procédé suivant la revendication 10,
dans lequel on met, dans la direction (9) périphérique, une garniture d'étanchéité entre la première bague (8) d'adaptation et la deuxième bague (10) d'adaptation.

12. Procédé suivant la revendication 10 ou 11,
dans lequel on assemble entre elles, par un filet (17), la troisième bague (11) d'adaptation et la deuxième bague (10) d'adaptation.

13. Procédé suivant la revendication 12,
dans lequel on constitue le filet (17) avec un pas, qui s'étend sur 360° dans la direction périphérique.

14. Procédé suivant la revendication 12,
dans lequel on constitue le pas du filet en forme d'hélice.
